# EUROPEAN PATENT APPLICATION

(11) **EP 3 680 063 A1**
(43) Date of publication of application: **15.07.2020**
(21) Application number: 20150652.4
(22) Date of filing: 08.01.2020
(51) Int. Cl.: B24B 23/00, B24B 23/02, B24B 45/00

(54) **SPRING LOADED ADJUSTABLE HEAD**

(30) Priority: 14.01.2019 US 201962792131 P; 11.12.2019 US 201916710653
(71) Applicant: Dynabrade, Inc., Clarence, NY 14031 (US)
(72) Inventor: SABIN, Jeffrey M., West Seneca, NY 14224 (US); LEHMAN, Frank, Wilson, NY 14172 (US); SWAINE, John Thomas, Tonawanda, NY 14223 (US)
(74) Representative: Reichert & Lindner Partnerschaft Patentanwälte

(57) **Abstract**

An adjustable mechanism (60, 260) for an angle drill or a die grinder (10, 210), including a receiver (80, 280), including a first section (82, 282), and a second section (90, 290) connected to the first section (82, 282), a mating component (100, 300), a tension component (112, 312) arranged on the second section (90, 290), and an axial sliding support (114) operatively arranged to be secured to the second section (90, 290), wherein at least one of the first section (82, 282) and the mating component (100, 300) includes a plurality of holes (88, 288) and the other of the first section (82, 282) and the mating component (100, 300) includes one or more pins (104, 304), the one or more pins (104, 304) being operatively arranged to removably engage the plurality of holes (88, 288).

## Description

### CROSS-REFERENCE TO RELATED APPLICATIONS

This application claims the benefit under 35 U.S.C. § 119(e) of U.S. Provisional Application No. 62/792,131, filed January 14, 2019, which application is incorporated herein by reference in its entirety.

### FIELD

The present disclosure relates to mechanical or powered abrasive tools, more particularly, to handheld angle die grinders, and, even more particularly, to handheld angle drill or die grinders having a spring loaded adjustable head.

### BACKGROUND

Handheld angle drill and die grinders and other handheld abrading or abrasive tools are common in the prior art having been available to the general public for several decades. One problem common to handheld (portable) angle drill or die grinders and other handheld mechanical or powered tools is the set angle of the abrasive device (e.g., disc, wheel, pad, etc.) with respect to the handle. In order to utilize the tool in small compact spaces, it is often necessary to change the angle or position of the drill or abrasive component relative to the handle. Traditionally, in order to alter the angle or position of the abrasive component relative to the handle, a tool is required in order to loosen the abrasive component. Once loosened, the drill bit or abrasive component is positioned in a correct angle, and then tightened back down to the handle. However, this can be time consuming and, if the angle needs to be changed often, is very inconvenient. Another technique is for the user to rotate the tool by bending the wrist and/or arm to position the tool. This is not ergonomic.

Thus, there is a long-felt need for a handheld angle die grinder that has a rotatable head such that the abrasive component can be quickly and easily rotated to any angle relative to the handle.

### SUMMARY

According to aspects illustrated here, there is provided an adjustable mechanism for an angle drill or a die grinder, comprising a receiver, including a first section, and a second section connected to the first section, a mating component, a tension component arranged on the second section, and an axial sliding support operatively arranged to be secured to the second section, wherein at least one of the first section and the mating component includes a plurality of holes and the other of the first section and the mating component includes one or more pins, the one or more pins being operatively arranged to removably engage the plurality of holes.

According to aspects illustrated herein, there is provided an angle rotation device, comprising an adjustable mechanism, including a receiver, including a first section, and a second section connected to the first section, a mating component arranged to engage the receiver, a tension component arranged on the second section, and an axial sliding support operatively arranged to be secured to the second section, an adjustable head connected to the mating component, and a motor connected to the receiver, wherein at least one of the first section and the mating component includes a plurality of holes and the other of the first section and the mating component includes one or more pins, the one or more pins being operatively arranged to removably engage the plurality of holes.

According to aspects illustrated herein, there is provided an adjustable head for an angle drill or die grinder, comprising a receiver including a first section including a plurality of holes, and a second section connected to the first section, a mating component including one or more pins, the one or more pins being operatively arranged to removably engage the plurality of holes, a tension component arranged on the second section, and an axial sliding support operatively arranged to be secured to the second section.

The present disclosure includes an adjustable mechanism for an angle drill or a die grinder, comprising a receiver, including a first section and a second section connected to the first section, a mating component, a tension component arranged on the second section, and an axial sliding support operatively arranged to be secured to the second section. At least one of the first section and the mating component includes a plurality of holes and the other of the first section and the mating component includes one or more pins, the one or more pins being operatively arranged to removably engage the plurality of holes. In some embodiments, the first section includes the plurality of holes and the mating component includes the one or more pins.

In some embodiments, the second section is cylindrical. In some embodiments, the second section is at least partially frusto-conical.

In some embodiments, the tension component biases the mating component in a first axial direction.

In some embodiments, the adjustable mechanism further comprises an adjustable head operatively arranged to be connected to the mating component. In some embodiments, the adjustable head comprises a frusto-conical taper at an end, the end operatively arranged to engage the mating component. In some embodiments, the adjustable head comprises a stop operatively arranged to limit axial movement of the mating component relative to the receiver. In some embodiments, the axial sliding support comprises a groove having a surface, the stop being operatively arranged to engage the groove and the surface.

In some embodiments, the adjustable mechanism further comprises a shaft including a first end connected to the adjustable head and a second end operatively arranged to be connected to a motor of the angle drill or die grinder. In some embodiments, the shaft extends at least partially through the tension component, the mating component, and the receiver. In some embodiments, the shaft comprises a first section and a second section, the second section being non-rotatably connected to the first section. In some embodiments, the adjustable mechanism further comprises a shaft lock operatively arranged to prevent axial movement of shaft with respect to adjustable head.

In some embodiments, when the adjustable head is in a rotatably locked position: the one or more pins are at least partially engaged with the plurality of holes, and the adjustable head is non-rotatably connected to the motor.

In some embodiments, when the adjustable head is in a rotatably unlocked position: the one or more pins are disengaged from the plurality of holes, and the adjustable head (40, 240) is rotatably connected to the motor.

These and other objects, features, and advantages of the present disclosure will become readily apparent upon a review of the following detailed description of the disclosure, in view of the drawings and appended claims.

### BRIEF DESCRIPTION OF THE DRAWINGS

Various embodiments are disclosed, by way of example only, with reference to the accompanying schematic drawings in which corresponding reference symbols indicate corresponding parts, in which:
Figure 1 is a perspective view of an angle drill having an adjustable head;
Figure 2A is a front perspective exploded view of the angle drill shown in Figure 1;
Figure 2B is a rear perspective exploded view of the angle drill shown in Figure 1;
Figure 3 is a front elevational view of the angle drill shown in Figure 1;
Figure 4 is a cross-sectional view of the angle drill taken generally along line 4-4 in Figure 3, in a rotatably locked position;
Figure 5A is a partial sectional view of the angle drill shown in Figure 1, in a rotatably unlocked position;
Figure 5B is a partial sectional view of the angle drill shown in Figure 1, in a rotatably unlocked position;
Figure 5C is a partial sectional view of the angle drill shown in Figure 1, in a rotatably locked position;
Figure 6A is a front perspective exploded view of an angle drill having an adjustable head;
Figure 6B is a rear perspective exploded view of the angle drill shown in Figure 6A;
Figure 7 is a front elevational view of the angle drill shown in Figure 6A; and,
Figure 8 is a cross-sectional view of the angle drill taken generally along line 8-8 in Figure 7.

### DETAILED DESCRIPTION

At the outset, it should be appreciated that like drawing numbers on different drawing views identify identical, or functionally similar, structural elements. It is to be understood that the claims are not limited to the disclosed aspects.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments. The assembly of the present disclosure could be driven by hydraulics, electronics, pneumatics, and/or springs.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification and claims. The term "approximately" is intended to mean values within ten percent of the specified value.

By "non-rotatably connected" or "non-rotatably secured" elements, we mean that: the elements are connected so that whenever one of the elements rotate, all the elements rotate; and relative rotation between the elements is not possible. Radial and/or axial movement of non-rotatably connected elements with respect to each other is possible, but not required. By "rotatably connected" elements, we mean that the elements are rotatable with respect to each other.

Moreover, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

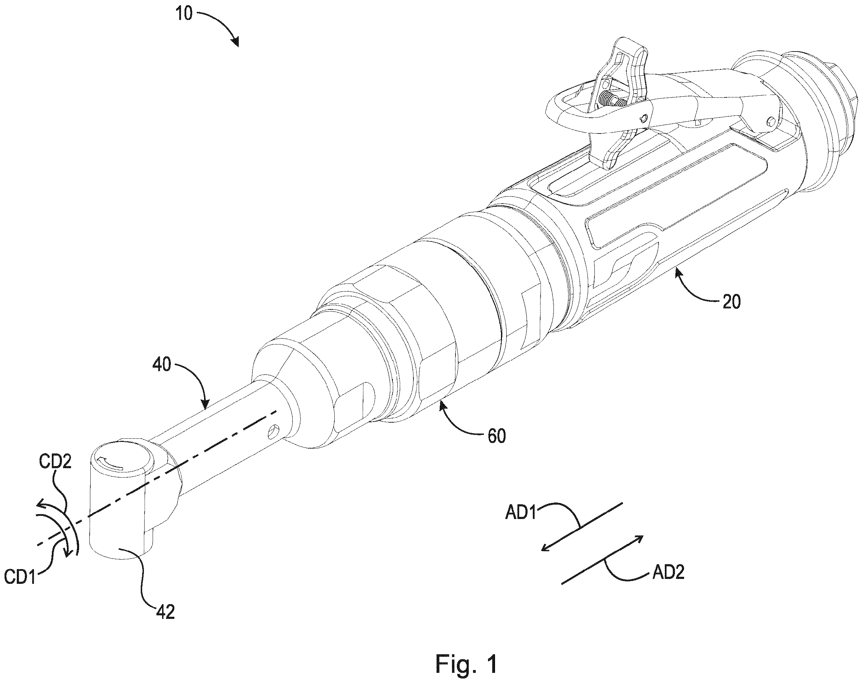

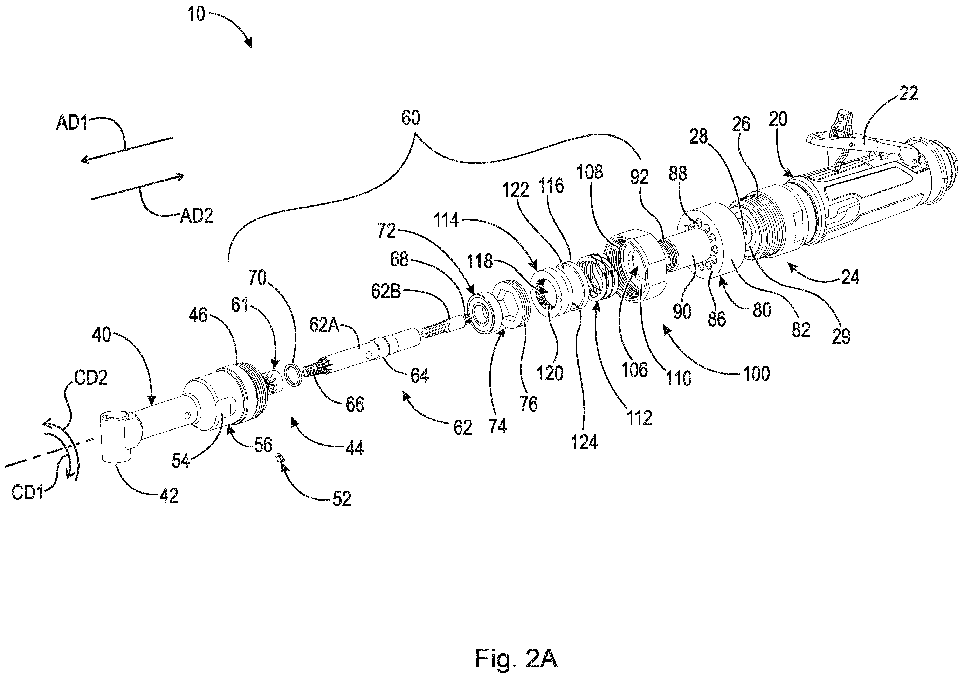

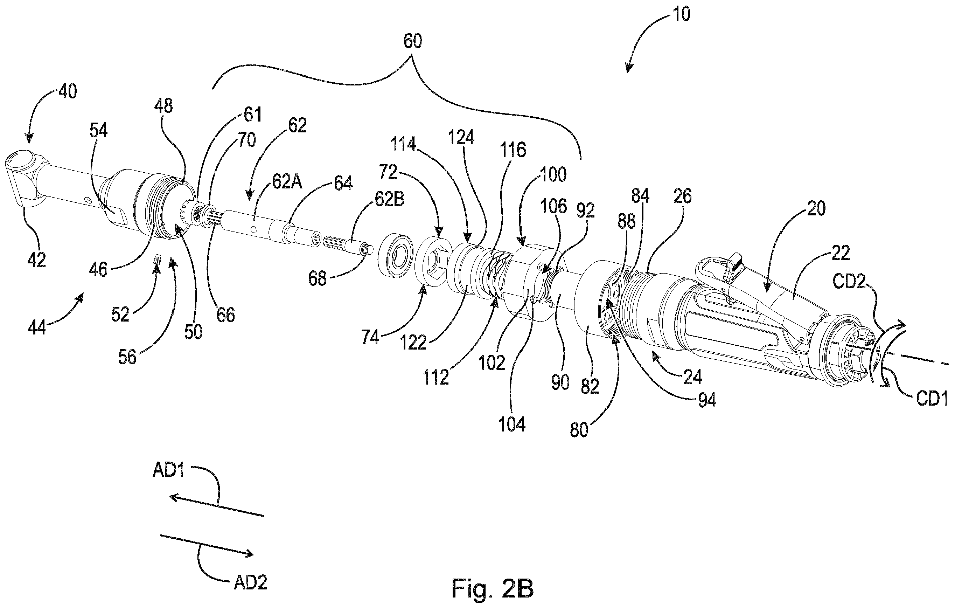

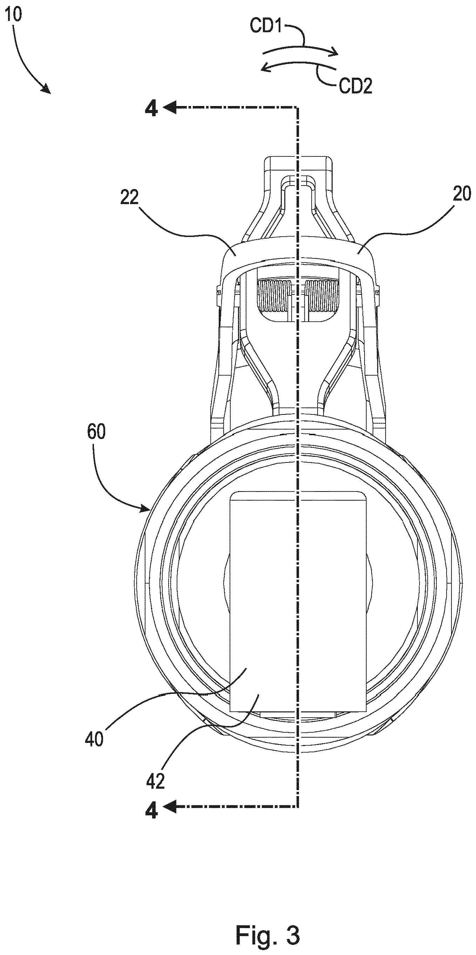

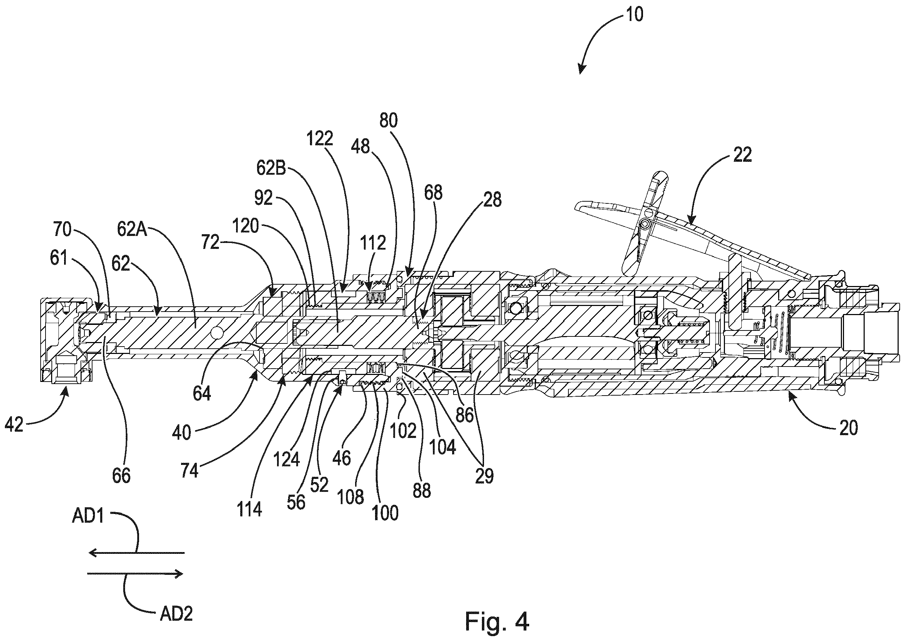

Adverting now to the figures, Figure 1 is a perspective view of angle drill, die grinder, or angle rotation device **10** having adjustable head **40.** Figure 2A is a front perspective exploded view of angle drill **10.** Figure 2B is a rear perspective exploded view of angle drill 10. Figure 3 is a front elevational view of angle drill **10.** Figure 4 is a cross-sectional view of angle drill **10** taken generally along line **4-4** in Figure 3, in a rotatably locked position. Angle drill **10** generally comprises motor **20,** adjustable head **40,** and adjustable mechanism **60.** The following description should be read in view of Figures 1-4.

Motor **20** generally comprises motor trigger **22** and end **24.** Motor **20** is operatively arranged to drive shaft **62** as will be described in greater detail below. End **24** comprises radially outward facing surface **26** and coupler **28.** Radially outward facing surface **26** may comprise threading arranged to engage threading on radially inward facing surface **84** of receiver **80.** Coupler **28** is generally supported by bearing **29** having a hole in end **24** comprising a threaded inward facing surface. In some embodiments, coupler **28** comprises a plurality of radially inward extending teeth, similar to that of an annular gear. Coupler **28** is operatively arranged to rotate relative to radially outward facing surface **26** and motor trigger **22,** and therefore rotate shaft **62** with respect to radially outward facing surface **26** and motor trigger **22.** In order to activate motor **20,** motor trigger **22** is pressed or displaced toward motor **20** (i.e., squeezed), which action rotates coupler **28,** thus causing shaft **62** and chuck **42** to rotate. Motor trigger **22** may further comprise a safety lock to prevent activation of motor **20.**

Adjustable head **40** comprises chuck **42** and end **44,** end **44** being arranged opposite chuck **42.** Chuck **42** is operatively arranged to engage a tool (not shown), for example, a grinding wheel, drill bit, hole saw, screw or securement device driver, or other rotation tool. Chuck **42** may also comprise a spindle. End **44** comprises radially outward facing surface **46,** which may comprise threading. Adjustable head **40** is operatively arranged to connect to mating component **100,** for example, via threaded engagement of radially outward facing surface **46** and radially inward facing surface **108.** Adjustable head **40** further comprises hole **50** which extends at least partially therethrough. Hole **50** forms one or more radially inward facing surfaces within adjustable head **40.** End **44** may further comprise frusto-conical taper **48** on radially inward facing surface formed by hole **50.** Frusto-conical taper **48** allows for better alignment and fastening capabilities when adjustable head **40** is being secured to mating component **100.** For example, as adjustable head **40** is being screwed into mating component **100** (e.g., via threading on radially outward facing surface **46** and radially inward facing surface **108),** frusto-conical taper **48** engages surface **110** to further align and secure the components. Additionally, frusto-conical taper **48** may engage axial sliding support **114** to help align adjustable head **40,** such that it can be slid over axial sliding support **114** and engage mating component **100,** as will be described in greater detail below.

Adjustable head **40** further comprises shaft **62.** Shaft **62** comprises end **66,** and **68,** and edge **64** arranged between ends **66** and **68.** End **66** may comprise a plurality of teeth and end **68** may comprise a plurality of teeth. In some embodiments, end **68** comprises threading. End **66** is operatively arranged to non-rotatably connect to pinion gear **61,** which is arranged at least partially in or proximate to chuck **42.** Shaft **62** is arranged to rotate in circumferential direction **CD1** and/or circumferential direction **CD2,** thus rotating pinion gear **61.** Pinion gear **61** engages another gear within chuck **42** which changes the rotation direction at an angle (e.g., 90°), hence an "angle drill." Shaft **62** is rotatably connected to adjustable head **40** via bearing **70,** bearing **72,** and shaft lock **74.** Bearing **72** is arranged to engage edge **64** and, together with shaft lock **74,** rotatably secure shaft **62** to adjustable head **40** and prevent axial displacement of shaft **62** in axial direction **AD1** and **AD2** relative to adjustable head **40.** In an example embodiment, shaft lock **74** comprises radially outward facing surface **76** that is connected to a radially inward facing surface of hole **50,** for example, via threaded engagement (see Figure 4). It should be appreciated, however, that shaft lock **74** may be secured to adjustable head **40** via any suitable means, for example, adhesives, rivets, screws, bolts, welding, soldering, etc. End **68** is arranged to engage motor **20,** specifically coupler **28.** In some embodiments, the threading of end **68** engages the threading of coupler **28.** The plurality of teeth of end **68** engage the plurality of teeth of coupler **28.** In some embodiments, shaft **62** comprises two sections, section **62A** and section **62B.** As shown, section **62A** engages adjustable head **40** and section **62B** engages motor **20.** Sections **62A** and **62B** may be connected via any suitable means, for example, splines (e.g., external splines on section **62B** and internal splines on section **62A** or vice versa), hexagonal engagement, octagonal engagement, etc. It should be appreciated that section **62A** is operatively arranged to be displaceable in axial direction **AD1** with respect to section **62B,** for example, during the adjustment of adjustable head **40** with respect to motor trigger **22.** The connection between sections **62A** and **62B** allow axial displacement while maintaining rotatable connection therebetween. The use of a two section shaft reduces vibration in angle drill **10** during operation.

In some embodiments, adjustable head **40** further comprises hole **56** and stop **52.** Hole **56** extends through radially outward facing surface **46** and into hole **50.** Stop **52** is operatively arranged to engage hole **56** and at least partially extend into hole **50** to engage groove **122** of axial sliding support **114** (see Figure 4). The function of stop **52** and hole **56** is to prevent the over displacement of adjustable head **40** with respect to motor **20** and receiver **80,** as will be described in greater detail below. Stop **52** is arranged to engage surface **124** of groove **122** and prevent further displacement of adjustable head **40** in axial direction **AD1** relative to receiver **80.** In some embodiments, adjustable head **40** further comprises one or more grips **54.** Grips **54** allow a user to more easily rotate adjustable head **40,** in circumferential directions **CD1** and **CD2,** with respect to motor **20.**

Adjustable mechanism **60** comprises receiver **80,** mating component **100,** tension component **112,** and axial sliding support **114.**

Receiver **80** is operatively arranged to be connected to motor **20,** specifically end **24,** and comprises section **82,** section **90,** and through-bore **94** that extends through sections **82** and **90.** Section **82** comprises radially inward facing surface **84,** which may include threading, and axial facing surface **86.** In some embodiments, radially inward facing surface **84** is non-rotatably secured to radially outward facing surface **26** via threaded engagement. However, it should be appreciated that receiver **80** may be connected to end **24** via any suitable means, for example, adhesives, welding, soldering, bolts, screws, rivets, dowels, etc. Surface **86** comprises a plurality of holes **88** arranged therein. Holes **88** are operatively arranged to engage pins **104** and non-rotatably connect mating component **100** and receiver **80,** as will be described in greater detail below. In some embodiments, mating component **100** is rotatable with respect to receiver **80.** It should be appreciated that surface **86** may comprise any suitable number of holes arranged at any suitable location. For example, in some embodiments, surface **86** may comprise twelve holes **88** spaced apart by 30° about a center point. In some embodiments, surface **86** may comprise twenty holes **88** spaced apart by 18° about a center point. Section **90** is generally cylindrical or tubular and is connected to surface **86.** In some embodiments, section **90** is fixedly secured to section **82.** In some embodiments, section **90** is rotatably connected to section **82.** In some embodiments, sections **82** and **90** are integrally formed. Section **90** is arranged to engage mating component **100,** tension component **112,** and axial sliding support **114.** In some embodiments, section **90** comprises threading **92.**

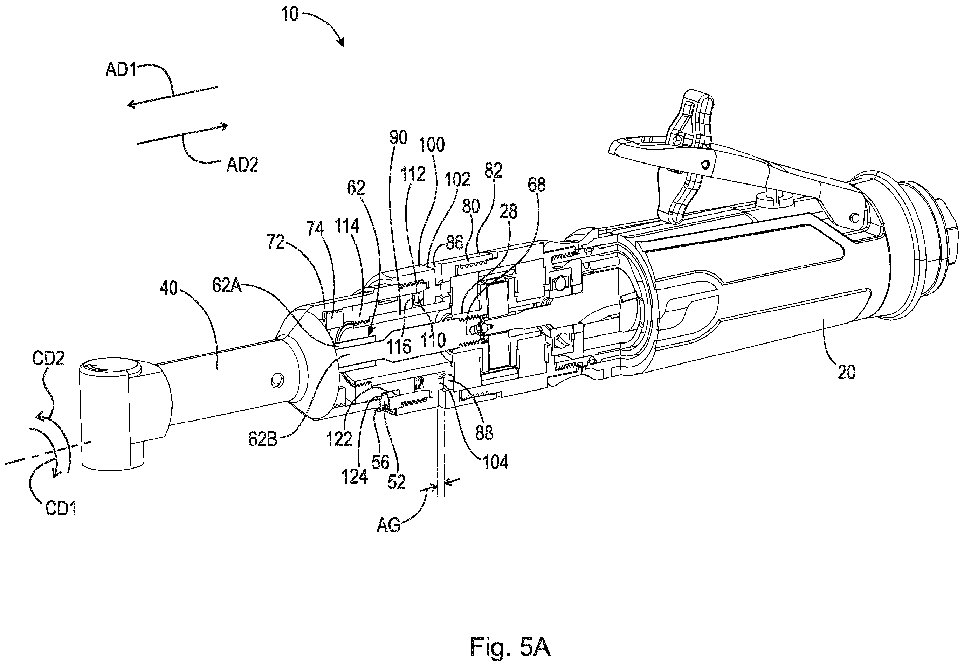

Mating component **100** is operatively arranged to engage receiver **80.** Mating component **100** comprises surface **102,** radially inward facing surface **108,** surface **110,** and through-bore **106** extending therethrough. Surface **102** is operatively arranged to engage and/or abut against surface **86.** Surface **102** comprises one or more pins **104** operatively arranged to engage holes **88.** In a rotatably locked position, surface **102** engages and/or abuts against surface **86,** pins **104** are at least partially engaged with holes **88,** and mating component **100** is non-rotatably connected to receiver **80** and thus motor **20.** In a rotatably unlocked position, axial gap **AG** is formed between surface **102** and surface **86** (see Figures 5A-C), pins **104** are fully disengaged with holes **88,** and mating component **100** is rotatable in circumferential directions **CD1** and **CD2** with respect to receiver **80** and thus motor **20.** Through-bore **106** is arranged to engage section **90.** Mating component **100** is arranged to non-rotatably connect to adjustable head **40.** In some embodiments, radially inward facing surface **108** comprises threading which threadably engages threading on radially outward facing surface **46.** It should be appreciated that although the present disclosure illustrates a threaded connection, any means for suitably connecting adjustable head **40** and mating component **100** may be used, for example, adhesives, welding, soldering, bolts, screws, rivets, pins, dowels, etc. Surface **110** is operatively arranged to engage frusto-conical taper **48** to help align and connect adjustable head **40** and mating component **100.** Surface **110** is also arranged to engage tension component **112.**

Tension component **112** and axial sliding support **114** are operatively arranged on section **90** to bias mating component **100** in axial direction **AD2** relative to receiver **80.** Tension component **112** may be any biasing element suitable for biasing mating component **100** toward receiver **80,** for example, a stacked wave spring (e.g., a CREST-TO-CREST® wave spring), a compression spring, etc. Tension component **112** is axially arranged between axial sliding support **114** and mating component **100,** specifically, surface **116** and surface **110,** respectively. Axial sliding support **114** comprises through-bore **118** arranged to engage section **90** and radially inward facing surface **120.** Axial sliding support **114** is operatively arranged to be secured to section **90.** In some embodiments, radially inward facing surface **120** comprises threading that engages with threading **92.** It should be appreciated, however, that axial sliding support **114** may be connected to section **90** via any suitable means, for example, adhesives, welding, soldering, bolts, rivets, pins, dowels, etc. In effect, the arrangement of axial sliding support **114** and tension component **112** biases mating component **100** toward the rotatably locked position (i.e., surface **102** engages and/or abuts against surface **86,** pins **104** are at least partially engaged with holes **88,** and mating component **100** is non-rotatably connected to receiver **80** and thus motor **20).** Axial sliding support **114** further provides a guide or support on which the radially inward facing surface formed by hole **50** of adjustable head **40** may slide (i.e., axial sliding support **114** provides stability to the sliding/rotating adjustable head **40).** Since adjustable head **40** is secured to mating component **100,** to disengage pins **104** from holes **88,** adjustable head **40** is displaced in axial direction **AD1** relative to motor **20.** This action compresses tension component **112.** Since pins **104** are no longer engaged with holes **88,** adjustable head **40** may be circumferentially displaced in circumferential directions **CD1** or **CD2** relative to motor **20.** Once the desired assembly is reached (e.g., chuck **42** is arranged at a 30° angle relative to motor trigger **22),** adjustable head **40** is released. Tension component **112** forces mating component **100** and thus adjustable head **40** in axial direction **AD2** relative to motor **20,** and pins **104** re-engage holes **88** to non-rotatably connect mating component **100** (and adjustable head **40)** with receiver **80** (and motor **20).** As previously described, axial sliding support **114** further comprises groove **122** having surface **124.** Groove **122** and surface **124,** along with hole **56** and stop **52,** provide a limit on total axial displacement of mating component **100** relative to receiver **80,** and thus adjustable head **40** relative to motor **20,** in axial direction **AD1.** When mating component **100** and adjustable head **40** are at the maximum axial displacement, stop **52** will engage surface **124** thereby preventing any additional displacement in axial direction **AD1** relative to receiver **80.** This assembly may prevent over compression of tension component and thus preserves the longevity of tension component **112.**

Figure 5A is a partial sectional view of angle drill **10,** in a rotatably unlocked position. To shift from the rotatably locked position, as shown in Figure 4, to the rotatably unlocked position, as shown in Figure 5A, adjustable head **40** is displaced in axial direction **AD1** relative to motor **20** (i.e., away from motor **20).** When angle drill **10** is in the rotatably unlocked position, axial gap **AG** is formed between surface **102** and surface **86,** pins **104** of mating component **100** are fully disengaged from holes **88** of receiver **80,** and mating component **100** and thus adjustable head **40** is rotatable in circumferential directions **CD1** and **CD2** with respect to receiver **80** and thus motor **20.** In the rotatably unlocked position, tension component **112** is in a first state of compression and adjustable head **40** is rotatable with respect to motor **20.**

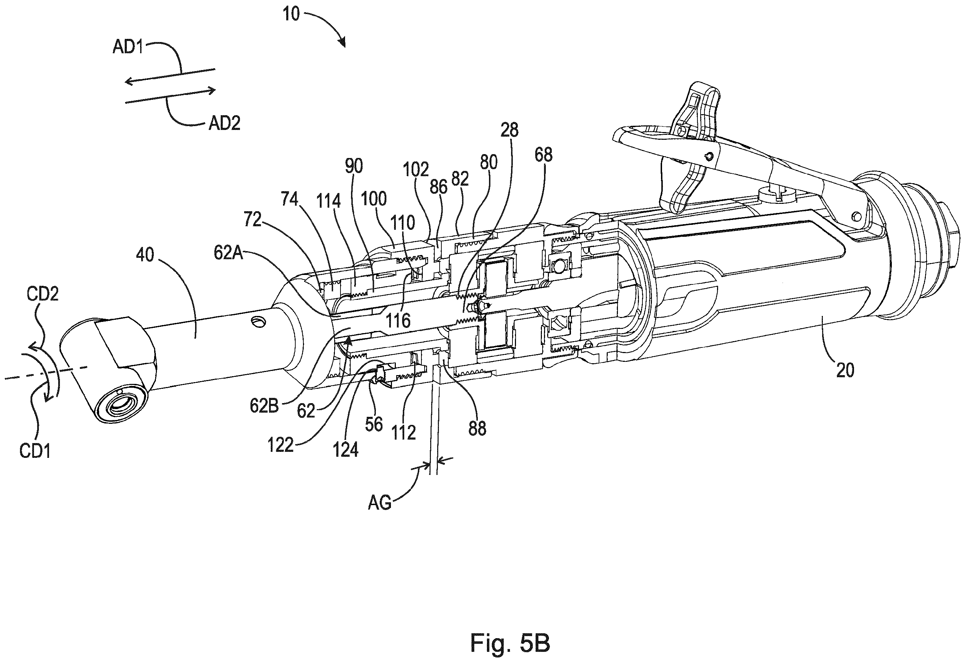

Figure 5B is a partial sectional view of angle drill **10,** in a rotatably unlocked position. As shown, adjustable head **40** has been rotated in circumferential direction **CD2** relative to motor assembly **20.** Tension component **112** is exerting a force on mating component **100** in axial direction **AD2** biasing mating component **100** toward receiver **80.** In the rotatably unlocked position, adjustable head **40** may be rotated with respect to motor **20** since pins **104** of mating component **100** are completely disengaged from holes **88** of receiver **80.** Adjustable head **40** should be rotated in circumferential direction **CD1** or circumferential direction **CD2** until a desired angle is reached and pins **104** align with holes **88.**

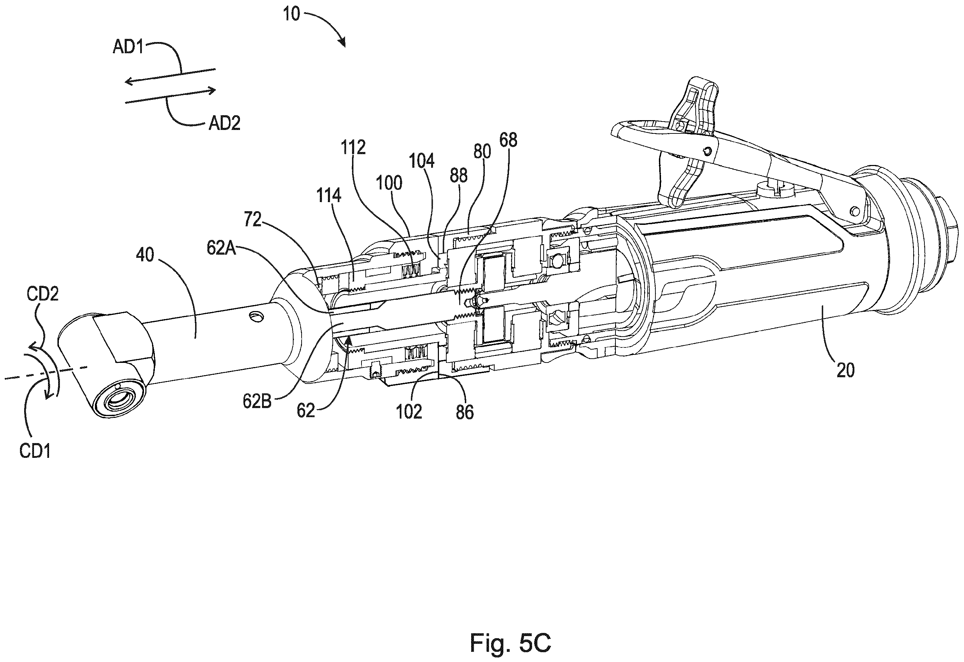

Figure 5C is a partial sectional view of angle drill **10,** in a rotatably locked position. In a rotatably locked position, surface **102** engages and/or abuts against surface **86,** pins **104** of mating component **100** are at least partially engaged with holes **88** of receiver **80,** and mating component **100** is non-rotatably connected to receiver **80** and thus motor **20.** As previously described with respect to Figure 5B, once adjustable head **40** is rotated to a desired angle with respect to motor **20,** and pins **104** are aligned with holes **88,** the force on adjustable head **40** in axial direction **AD1** is released allowing tension component **112** to force mating component **100** back into engagement with receiver **80,** thus rotatably locking adjustable head **40** with motor **20.** In the rotatably locked position, tension component **112** is in a second state of compression, which is less than the first state of compression (i.e., tension component **112** exerts more force on mating component **100** in the first state of compression than in the second state of compression).

Generally, angle drill **10** is to be used in situations in which a user may want chuck **42** to be positioned at multiple angles throughout a job. Angle drill **10** allows the user to easily change the angle of chuck **42** (and the connected tool) relative to motor **20** and motor trigger **22** simply by pulling adjustable head **40** away from the motor **20** and rotating adjustable head **40** with respect to motor **20** until a suitable angle is reached. Adjustable head **40** is then released and tension component **112** forces adjustable head **40** back toward motor **20.**

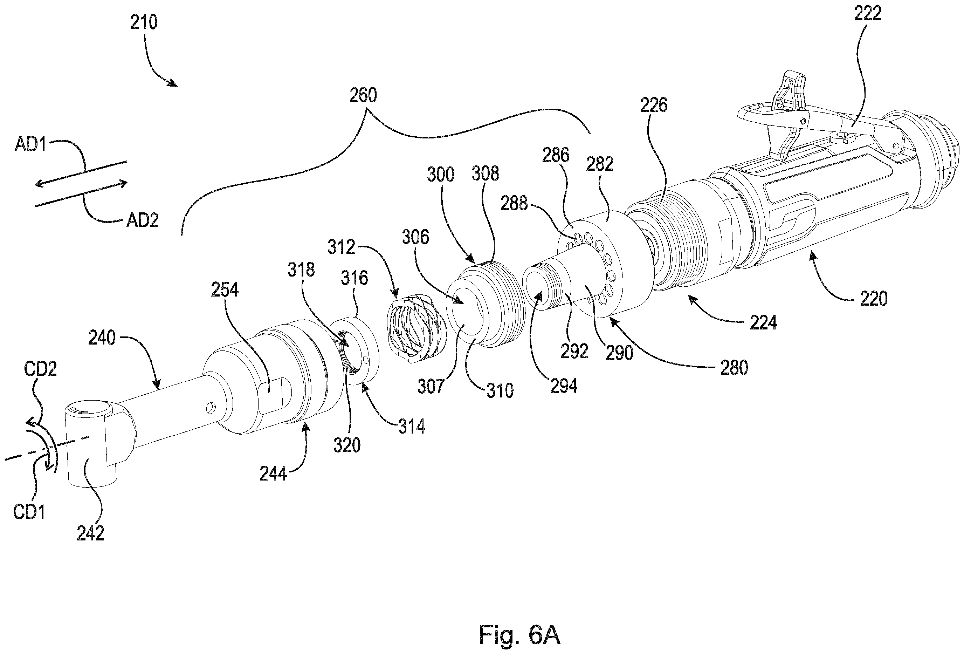

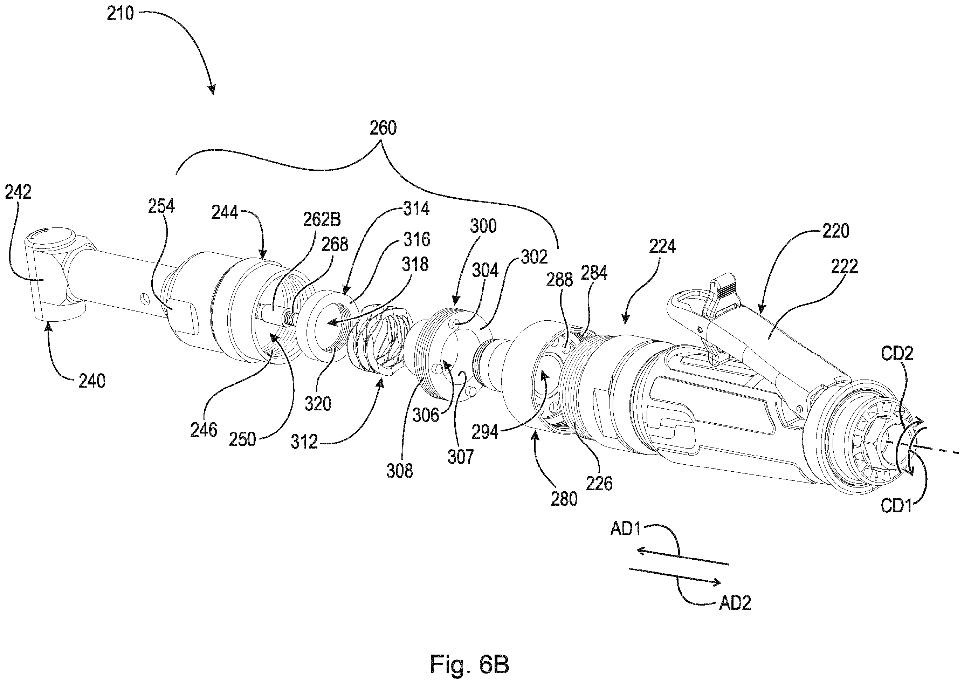

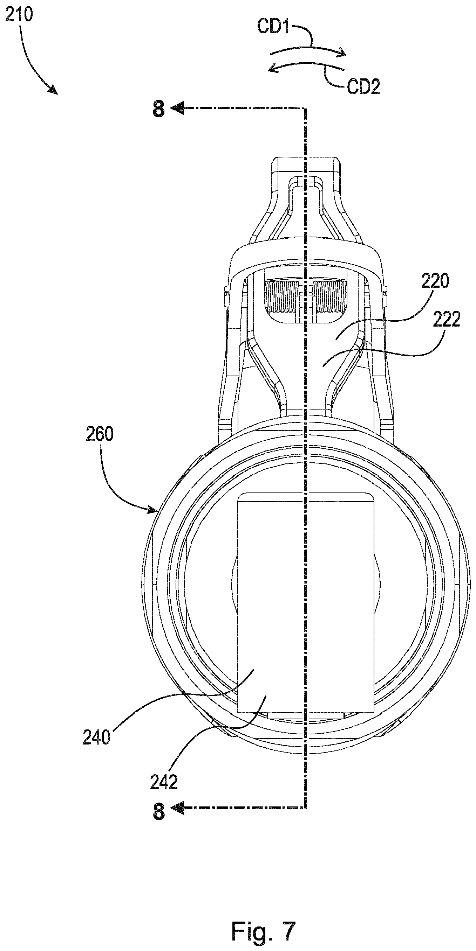

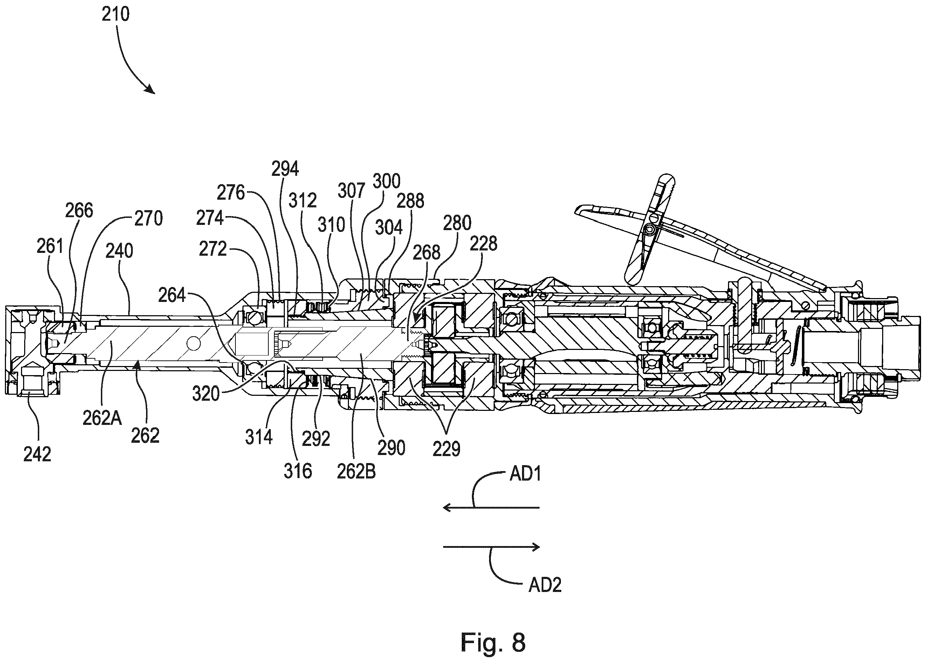

Figure 6A is a front perspective exploded view of angle drill, die grinder, or angle rotation device **210** having adjustable head **240.** Figure 6B is a rear perspective exploded view of angle drill **210.** Figure 7 is a front elevational view of angle drill **210.** Figure 8 is a cross-sectional view of angle drill **210** taken generally along line **8-8** in Figure 7, in a rotatably locked position. Angle drill **210** generally comprises motor **220,** adjustable head **240,** and adjustable mechanism **260.** The following description should be read in view of Figures 6A-7.

Motor **220** generally comprises motor trigger **222** and end **224.** Motor **220** is operatively arranged to drive shaft **262** as will be described in greater detail below. End **224** comprises radially outward facing surface **226** and coupler **228.** Radially outward facing surface **226** may comprise threading arranged to engage threading on radially inward facing surface **284** of receiver **280.** Coupler **228** is generally supported by bearing **229** having a hole in end **224** comprising a threaded inward facing surface. In some embodiments, coupler **228** comprises a plurality of radially inward extending teeth, similar to that of an annular gear. Coupler **228** is operatively arranged to rotate relative to radially outward facing surface **226** and motor trigger **222,** and therefore rotate shaft **262** with respect to radially outward facing surface **226** and motor trigger **222.** In order to activate motor **220,** motor trigger **222** is pressed or displaced toward motor **220** (i.e., squeezed), which action rotates coupler **228,** thus causing shaft **262** and chuck **242** to rotate. Motor trigger **222** may further comprise a safety lock to prevent unintended activation of motor **220.**

Adjustable head **240** comprises chuck **242** and end **244,** end **244** being arranged opposite chuck **242.** Chuck **242** is operatively arranged to engage a tool (not shown), for example, a grinding wheel, drill bit, hole saw, screw or securement device driver, or other rotation tool. Chuck **242** may also comprise a spindle. End **244** comprises radially inward facing surface **246,** which may comprise threading. Adjustable head **240** is operatively arranged to connect to mating component **300,** for example, via threaded engagement of radially inward facing surface **246** and radially outward facing surface **308.** Adjustable head **240** further comprises hole **250** which extends at least partially therethrough. Hole **250** forms one or more radially inward facing surfaces within adjustable head **240.**

Adjustable head **240** further comprises shaft **262.** Shaft **262** comprises end **266,** and **268,** and edge **264** arranged between ends **266** and **268.** End **266** may comprise a plurality of teeth and end **268** may comprise a plurality of teeth. In some embodiments, end **268** comprises threading. End **266** is operatively arranged to non-rotatably connect to pinion gear **261,** which is arranged at least partially in or proximate to chuck **242.** Shaft **262** is arranged to rotate in circumferential direction **CD1** and/or circumferential direction **CD2,** thus rotating pinion gear **261.** Pinion gear **261** engages another gear within chuck **242** which changes the rotation direction at an angle (e.g., 90°), hence an "angle drill." Shaft **262** is rotatably connected to adjustable head **240** via bearing **270,** bearing **272,** and shaft lock **274.** Bearing **272** is arranged to engage edge **264** and, together with shaft lock **274,** rotatably secure shaft **262** to adjustable head **240** and prevent axial displacement of shaft **262** in axial direction **AD1** and **AD2** relative to adjustable head **240.** In an example embodiment, shaft lock **274** comprises radially outward facing surface **276** that is connected to a radially inward facing surface of hole **250,** for example, via threaded engagement (see Figure 8). It should be appreciated, however, that shaft lock **274** may be secured to adjustable head **240** via any suitable means, for example, adhesives, rivets, screws, bolts, welding, soldering, etc. End **268** is arranged to engage motor **220,** specifically coupler **228.** In some embodiments, the threading of end **268** engages the threading of coupler **228.** The plurality of teeth of end **268** engage the plurality of teeth of coupler **228.** In some embodiments, adjustable head **240** further comprises one or more grips **254.** Grips **254** allow a user to more easily rotate adjustable head **240,** in circumferential directions **CD1** and **CD2,** with respect to motor **220.** In some embodiments, shaft **262** comprises two sections, section **262A** and section **262B.** As shown, section **262A** engages adjustable head **240** and section **262B** engages motor **220.** Sections **262A** and **262B** may be connected via any suitable means, for example, splines (e.g., external splines on section **262B** and internal splines on section **262A** or vice versa), hexagonal engagement, octagonal engagement, etc. It should be appreciated that section **262A** is operatively arranged to be displaceable in axial direction **AD1** with respect to section **262B,** for example, during the adjustment of adjustable head **240** with respect to motor trigger **222.** The connection between sections **262A** and **262B** allow axial displacement while maintaining rotatable connection therebetween. The use of a two section shaft reduces vibration in angle drill **210** during operation.

Adjustable mechanism **260** comprises receiver **280,** mating component **300,** tension component **312,** and spring stop **314.**

Receiver **280** is operatively arranged to be connected to motor **220,** specifically end **224,** and comprises section **282,** section **290,** section **292,** and through-bore **294** that extends through sections **282, 290,** and **292.** Section **282** comprises radially inward facing surface **284,** which may include threading, and axial facing surface **286.** In some embodiments, radially inward facing surface **284** is non-rotatably secured to radially outward facing surface **226** via threaded engagement. However, it should be appreciated that receiver **280** may be connected to end **224** via any suitable means, for example, adhesives, welding, soldering, bolts, screws, rivets, dowels, etc. Surface **286** comprises a plurality of holes **288** arranged therein. Holes **288** are operatively arranged to engage pins **304** and non-rotatably connect mating component **300** and receiver **280,** as will be described in greater detail below. It should be appreciated that surface **286** may comprise any suitable number of holes arranged at any suitable location. For example, in some embodiments, surface **286** may comprise twelve holes **288** spaced apart by 30° about a center point. In some embodiments, surface **286** may comprise twenty holes **288** spaced apart by 18° about a center point. Section **290** is generally frusto-conical and is connected to surface **286.** Section **292** is generally cylindrical and is connected to section **290.** Sections **290** and **292** are arranged to engage mating component **300,** tension component **312,** and spring stop **314.** In some embodiments, section **292** comprises threading.

Mating component **300** is operatively arranged to engage receiver **280.** Mating component **300** comprises surface **302,** radially outward facing surface **308,** surface **310,** and through-bore **306** extending therethrough and forming radially inward facing surface **307.** Surface **302** is operatively arranged to engage and/or abut against surface **286.** Surface **302** comprises one or more pins **304** operatively arranged to engage holes **288.** In a rotatably locked position, surface **302** engages and/or abuts against surface **286,** pins **304** are at least partially engaged with holes **288,** and mating component **300** is non-rotatably connected to receiver **280** and thus motor **220.** In a rotatably unlocked position, axial gap **AG** is formed between surface **302** and surface **286** (see Figures 5A-C), pins **304** are fully disengaged with holes **288,** and mating component **300** is rotatable in circumferential directions **CD1** and **CD2** with respect to receiver **280** and thus motor **220.** Through-bore **306** is arranged to engage section **292** and section **290.** Specifically, frusto-conical section **290** is arranged to engage frusto-conical radially inward facing surface **307.** Frusto-conical section **290** in this embodiment has a similar function to axial sliding support **114** of Figures 1-5C; it offers stability when mating component **300** is engaged with receiver **280,** but less stability when these components are disengaged since the conical surface becomes separated. Therefore, it has more movement/displacement potential. Mating component **300** is arranged to non-rotatably connect to adjustable head **240.** In some embodiments, radially outward facing surface **308** comprises threading which threadably engages threading on radially outward facing surface **246.** It should be appreciated that although the present disclosure illustrates a threaded connection, any means for suitably connecting adjustable head **240** and mating component **300** may be used, for example, adhesives, welding, soldering, bolts, screws, rivets, pins, dowels, etc. Surface **310** is operatively arranged to engage tension component **312.**

Tension component **312** and spring stop **314** are operatively arranged on sections **290** and **292** to bias mating component **300** in axial direction **AD2** relative to receiver **280.** Tension component **312** may be any biasing element suitable for biasing mating component **300** toward receiver **280,** for example, a stacked wave spring (e.g., a CREST-TO-CREST® wave spring), a compression spring, etc. Tension component **312** is axially arranged between spring stop **314** and mating component **300,** specifically, surface **316** and surface **310,** respectively. Spring stop **314** comprises through-bore **318** arranged to engage section **292** and radially inward facing surface **320.** Spring stop **314** is operatively arranged to be secured to section **292.** In some embodiments, radially inward facing surface **320** comprises threading that engages with threading of section **292.** It should be appreciated, however, that spring stop **314** may be connected to section **292** via any suitable means, for example, adhesives, welding, soldering, bolts, rivets, pins, dowels, etc. In effect, the arrangement of spring stop **314** and tension component **312** biases mating component **300** toward the rotatably locked position (i.e., surface **302** engages and/or abuts against surface **286,** pins **304** are at least partially engaged with holes **288,** surface **307** is engaged with or arranged proximate to section **290,** and mating component **300** is non-rotatably connected to receiver **280** and thus motor **220).** Since adjustable head **240** is secured to mating component **300,** to disengage pins **304** from holes **288,** adjustable head **240** is displaced in axial direction **AD1** relative to motor **220.** This action compresses tension component **312.** Since pins **304** are no longer engaged with holes **288,** adjustable head **240** may be circumferentially displaced in circumferential directions **CD1** or **CD2** relative to motor **220.** Once the desired assembly is reached (e.g., chuck **242** is arranged at a 30° angle relative to motor trigger **222** and pins **304** align with holes **288),** adjustable head **240** is released. Tension component **312** forces mating component **300** and thus adjustable head **240** in axial direction **AD2** relative to motor **220,** and pins **304** re-engage holes **288** to non-rotatably connect mating component **300** (and adjustable head **240)** with receiver **280** (and motor **220).**

The operation of angle drill **210** is substantially similar to the operation of angle drill 10, as described in great detail above. Generally, angle drill **210** is to be used in situations in which a user may want chuck **242** to be positioned at multiple angles throughout a job. Angle drill **210** allows the user to easily change the angle of chuck **242** (and the connected tool) relative to motor **220** and motor trigger **222** simply by pulling adjustable head **240** away from the motor **220** and rotating adjustable head **240** with respect to motor **220** until a suitable angle is reached. Adjustable head **240** is then released and tension component **312** forces adjustable head **240** back toward motor **220.**

It will be appreciated that various aspects of the disclosure above and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

### LIST OF REFERENCE NUMERALS

- **10**: Angle drill (or die grinder)
- **20**: Motor
- **22**: Motor trigger
- **24**: End
- **26**: Radially outward facing surface
- **28**: Coupler
- **29**: Bearing
- **40**: Head
- **42**: Chuck (or spindle)
- **44**: End
- **46**: Radially outward facing surface
- **48**: Frusto-conical taper
- **50**: Hole
- **52**: Stop
- **54**: Grip(s)
- **56**: Hole
- **60**: Adjustable mechanism
- **61**: Pinion gear
- **62**: Shaft
- **62A**: Section
- **62B**: Section
- **64**: Edge
- **66**: End
- **68**: End
- **70**: Bearing
- **72**: Bearing
- **74**: Shaft lock
- **76**: Radially outward facing surface
- **80**: Receiver
- **82**: Section
- **84**: Radially inward facing surface
- **86**: Surface
- **88**: Holes
- **90**: Section
- **92**: Threading
- **100**: Mating component
- **102**: Surface
- **104**: Pin(s)
- **106**: Through-bore
- **108**: Radially inward facing surface
- **110**: Surface
- **112**: Tension component
- **114**: Axial sliding support
- **116**: Surface
- **118**: Through-bore
- **120**: Radially inward facing surface
- **122**: Groove
- **124**: Surface
- **210**: Angle drill (or die grinder)
- **220**: Motor
- **222**: Motor trigger
- **224**: End
- **226**: Radially outward facing surface
- **228**: Coupler
- **229**: Bearing
- **240**: Head
- **242**: Chuck (or spindle)
- **244**: End
- **246**: Radially inward facing surface
- **250**: Hole
- **254**: Grip(s)
- **260**: Adjustable mechanism
- **261**: Pinion gear
- **262**: Shaft
- **262A**: Section
- **262B**: Section
- **264**: Edge
- **266**: End
- **268**: End
- **270**: Bearing
- **272**: Bearing
- **274**: Shaft lock
- **276**: Radially outward facing surface
- **280**: Receiver
- **282**: Section
- **284**: Radially inward facing surface
- **286**: Surface
- **288**: Holes
- **290**: Section
- **292**: Section
- **294**: Through-bore
- **300**: Mating component
- **302**: Surface
- **304**: Pin(s)
- **306**: Through-bore
- **307**: Radially inward facing surface
- **308**: Radially outward facing surface
- **310**: Surface
- **312**: Tension component
- **314**: Spring stop
- **316**: Surface
- **318**: Through-bore
- **AG**: Axial gap
- **AD1**: Axial direction
- **AD2**: Axial direction
- **CD1**: Circumferential direction
- **CD2**: Circumferential direction

## Claims

1. An adjustable mechanism (60, 260) for an angle drill or a die grinder (10, 210), comprising:
a receiver (80, 280), including:
a first section (82, 282); and,
a second section (90, 290) connected to the first section (82, 282);
a mating component (100, 300);
a tension component (112, 312) arranged on the second section (90, 290); and,
an axial sliding support (114) operatively arranged to be secured to the second section (90, 290);
wherein at least one of the first section (82, 282) and the mating component (100, 300) includes a plurality of holes (88, 288) and the other of the first section (82, 282) and the mating component (100, 300) includes one or more pins (104, 304), the one or more pins (104, 304) being operatively arranged to removably engage the plurality of holes (88, 288).

2. The adjustable mechanism (60, 260) as recited in Claim 1, wherein the first section (82, 282) includes the plurality of holes (88, 288) and the mating component (100, 300) includes the one or more pins (104, 304).

3. The adjustable mechanism (60) as recited in Claim 1, wherein the second section (90) is cylindrical.

4. The adjustable mechanism (260) as recited in Claim 1, wherein the second section (290) is at least partially frusto-conical.

5. The adjustable mechanism (60, 260) as recited in Claim 1, wherein the tension component (112, 312) biases the mating component in a first axial direction (AD2).

6. The adjustable mechanism (60, 260) as recited in Claim 1, further comprising an adjustable head (40, 240) operatively arranged to be connected to the mating component (100, 300).

7. The adjustable mechanism (60) as recited in Claim 6, wherein the adjustable head (40) comprises a frusto-conical taper (48) at an end (44), the end (44) operatively arranged to engage the mating component (100).

8. The adjustable mechanism (60) as recited in Claim 6, wherein the adjustable head (40) comprises a stop (52) operatively arranged to limit axial movement of the mating component (100) relative to the receiver (80).

9. The adjustable mechanism (60) as recited in Claim 8, wherein the axial sliding support (114) comprises a groove (122) having a surface (124), the stop (52) being operatively arranged to engage the groove (122) and the surface (124).

10. The adjustable mechanism (60, 260) as recited in Claim 6, further comprising a shaft (62, 262) including a first end (66, 266) connected to the adjustable head (40, 240) and a second end (68, 268) operatively arranged to be connected to a motor (20, 220) of the angle drill or die grinder (10, 210).

11. The adjustable mechanism (60, 260) as recited in Claim 10, wherein the shaft (62, 262) extends at least partially through the tension component (112, 312), the mating component (100, 300), and the receiver (80, 280).

12. The adjustable mechanism (60, 260) as recited in Claims 10 or 11, wherein the shaft (62, 262) comprises a first section (62A, 262A) and a second section (62B, 262B), the second section (62B, 262B) being non-rotatably connected to the first section (62A, 262A).

13. The adjustable mechanism (60, 260) any of the proceeding claims, wherein when the adjustable head (40, 240) is in a rotatably locked position:
the one or more pins (104, 304) are at least partially engaged with the plurality of holes (88, 288); and,
the adjustable head (40, 240) is non-rotatably connected to the motor (20, 220).

14. The adjustable mechanism (60, 260) as recited in any of the proceeding claims, wherein when the adjustable head (40, 240) is in a rotatably unlocked position:
the one or more pins (104, 304) are disengaged from the plurality of holes (88, 288); and,
the adjustable head (40, 240) is rotatably connected to the motor (20, 220).

15. The adjustable mechanism (60, 260) as recited in any of the proceeding claims, further comprising a shaft lock (74, 274) operatively arranged to prevent axial movement of shaft (62, 262) with respect to adjustable head (40, 240).
